# EUROPÄISCHE PATENTSCHRIFT

(11) **EP 3 386 735 B1**
(45) Veröffentlichungstag und Bekanntmachung des Hinweises auf die Patenterteilung: **25.03.2020**
(21) Anmeldenummer: 16808997.7
(22) Anmeldetag: 07.12.2016
(51) Int. Cl.: B29C 70/38, B29C 70/54, B29C 70/56, B29C 70/20, D04H 3/04

(54) **ABLAGEVORRICHTUNG FÜR FASERROVINGS**
DEPOSITING DEVICE FOR FIBER ROVINGS
DISPOSITIF DE DÉPÔT POUR DES MÈCHES DE FIBRES

(30) Priorität: 09.12.2015 DE 102015224689
(43) Veröffentlichungstag der Anmeldung: 17.10.2018
(73) Patentinhaber: Voith Patent GmbH, 89522 Heidenheim (DE); Audi AG, 85045 Ingolstadt (DE)
(72) Erfinder: KAISER, Michael, 85614 Kirchseeon (DE); BURKHARD, Manfred, 86911 Dießen / OT Dettenschwang (DE); GÖTTINGER, Marco, 85614 Kirchseeon (DE); PRÖHL, Andreas, 85354 Freising (DE)
(86) Internationale Anmeldenummer: PCT/EP2016/080032
(87) Internationale Veröffentlichungsnummer: WO 2017/097818

(56) Entgegenhaltungen:
- EP-A2- 2 227 373
- US-A1- 2015 210 018

## Beschreibung

Die Erfindung betrifft eine Vorrichtung zur Herstellung von textilen Flächengebilden, die mehrere nebeneinander abgelegte Abschnitte von Faserrovings umfassen, nach dem Oberbegriff des Patentanspruchs 1.

Vorrichtungen zur Herstellung von textilen Flächengebilden sind aus dem Stand der Technik bekannt, bei denen Faserrovings nebeneinander und ggf. übereinander auf einer Ablagefläche abgelegt werden, um textile Flächengebilde herzustellen, die bspw. als Faserarmierung für faserverstärkte Kunststoffbauteile, wie bspw. Glasfaser verstärkte Kunststoff (GFK) -Bauteile oder Carbonfaser verstärkte Kunststoff (CFK) - Bauteile, Anwendung finden.

Eine solche Vorrichtung ist bspw. aus der DE 10 2009 042 384 bekannt. Bei dieser Vorrichtung werden einzelne Faserroving-Abschnitte nebeneinander mittels Greifereinheiten auf ein Transportband abgelegt, welches sich schräg zur Ablegerichtung der Faserroving-Abschnitte bewegt. Das daraus entstehende textile Flächengebilde ist bandförmig und muss in einem nachfolgenden Schritt noch entsprechend der Endkontur des herzustellenden Bauteils zugeschnitten werden. Dieser nachfolgende Zuschneideschritt ist aufwändig und verursacht einen hohen Verschnitt und damit Ausschuss des teuren Fasermaterials.

Aus der WO2012/136394 ist ferner eine Vorrichtung bekannt, mittels der Faserroving-Abschnitte mittels mehreren nebeneinander angeordneten Greifereinheiten auf einer Ablagefläche abgelegt werden. Hierbei sind die Greifereinheiten individuell voneinander steuerbar und deren Endpositionen sind unabhängig voneinander einstellbar. Mit dieser Vorrichtung ist es möglich, den Verschnitt zu reduzieren und das textile Flächengebilde in einer der Endkontur des zu fertigenden Bauteils näheren Form herzustellen, als dies mit der in der DE 10 2009 042 384 beschriebenen Vorrichtung möglich ist. Nachteilig an der in der WO'394 offenbarten Vorrichtung ist das Handling beim Ablegen der Faserroving-Abschnitte auf der Ablagefläche durch Verrutschen sowie der dennoch relativ große Verschnitt an Fasermaterial zur Herstellung der gewünschten Form des textilen Flächengebildes, entsprechend der gewünschten Endkontur des herzustellenden Bauteils. US2015/0210018 A1 und EP2227373 B1 offenbaren eine Vorrichtung zur Herstellung von textilen Flächengebilden, die mehrere nebeneinander abgelegte Abschnitte mehrerer insbesondere unidirektionaler Faserrovings umfassen.

Es ist daher die Aufgabe der vorliegenden Erfindung eine Vorrichtung vorzuschlagen, mittels der die Herstellung des textilen Flächengebildes bezüglich Handlingseigenschaften weiter verbessert wird und mittels der das textile Flächengebilde in einer endkonturnahen Form mit möglichst geringem Verschnitt herstellbar ist.

Die Aufgabe wird gelöst durch eine Vorrichtung mit den Merkmalen des Patentanspruchs 1.

Erfindungsgemäß ist vorgesehen, dass die Vorrichtung umfasst:
- eine Ablagefläche auf der die Abschnitte zumindest eines Faserrovings abgelegt werden; insbesondere ist die Ablagefläche als Tisch, bevorzugt seitlich verfahrbar und/oder als Hubtisch und/oder als Drehtisch ausgebildet;
- eine Bevorratungsvorrichtung zur Bereitstellung mehrerer Faserrovings sowie oder mehrere Übergabeeinrichtungen zur Bereitstellung desfreien Endes des jeweiligen Faserrovings,
- mehrere über der Ablagefläche angeordnete Bahnführungsschienen, an denen je eine Greifereinheit und je eine Schneideinheit angeordnet sind, wobei die jede Greifereinheit entlang der jeweiligen Bahnführungsschiene beweg- und positionierbar ist und so ausgelegt ist, dass sie geeignet ist:
   - zum Greifen des freien Endes eines der Greifereinheit zugeordneten Faserrovings und Übernehmen des freien Endes von der Übergabeeinrichtung,
   - zum Aufspannen des zugeordneten Faserrovings über der Ablagefläche, indem sich die Greifereinheit, während diese das freie Ende festhält, entlang der Bahnführungsschiene relativ von der Übergabeeinrichtung bis zu einer gewünschten Endposition weg bewegt und hierbei auf den Faserroving eine Zugkraft in seiner Längsrichtung ausgeübt wird, sowie
   - zum Freigeben und Ablegen des freien Endes auf der Ablagefläche an der Endposition des Greifers,
- zumindest eine Schneideinheit zum Durchtrennen zumindest eines der aufgespannten Faserrovings an einer Schneidposition zur Ausbildung des Abschnitts des jeweiligen Faserrovings, wobei die Schneidposition im aufgespannten Zustand des der Greifereinheit zugeordneten Faserrovings zwischen der Übergabeeinichtung und der Endposition der Greifereinheit angeordnet ist.
- wobei jede der Greifereinheiten, einen Niederhalter umfasst, mit dem der bzw. die Faserroving(s) im Bereich der jeweiligen Endposition gegen die Ablagefläche gedrückt werden kann.
und wobei jede der Schneideinheiten, einen Niederhalter umfasst, mit dem der bzw. die Faserroving(s) im Bereich der Schneidposition gegen die Ablagefläche gedrückt werden kann. Durch die Niederhalter wird das Handling beim Ablegen des jeweiligen freien Endes des Faserrovings deutlich verbessert, da dieses hierdurch unter Spannung definiert und ohne Verrutschen auf die Ablagefläche abgelegt werden kann.

Die erfindungsgemäße Vorrichtung ist ferner dadurch gekennzeichnet, dass Bahnführungsschienen vorgesehen sind, an denen jeweils zusätzlich zu der jeweiligen Greifereinheit eine Schneideinheit angeordnet ist, wobei der Greifereinheit und der Schneideinheit der Bahnführungsschiene einer der Faserrovings gemeinsam zugeordnet ist, um diesen gemeinsam zugeordneten Faserroving zu bearbeiten, d.h. bspw. zu greifen, aufzuspannen und zu durchtrennen, und wobei die Greifereinheit und die Schneideinheit einer Bahnführungsschiene entlang der Bahnführungsschiene unabhängig voneinander beweg- und positionierbar sind. Um die Ausführung nicht zu kompliziert werden zu lassen, ist es bevorzugt, dass Greifereinheit und Schneideinheit hintereinander an der Bahnführungsschiene angeordnet sind, so dass sie sich nicht gegenseitig überholen können.

Unter Bahnführungsschiene wird im Sinne der Erfindung eine Führungsschiene verstanden, die die an ihr beweglich angeordneten Greifereinheiten und Schneideinheiten führt und somit ihre Bahn für mögliche Bewegungen vorgibt. Insbesondere ist damit ein Verfahren zur Herstellung von textilen Flächengebilden mit mehreren nebeneinander abgelegten Abschnitten von mehreren, insbesondere unidirektionalen Faserrovings durchführbar, welches die folgenden Schritte umfasst:
- Bereitstellen einer Ablagefläche zum Ablegen der Abschnitte der Faserrovings,
- Bereitstellen einer Bevorratungsvorrichtung zur Bereitstellung der Faserrovings sowie zumindest einer Übergabeeinrichtung zur Bereitstellung des freien Endes der Faserrovings,
- Bereitstellen der oberhalb der Ablagefläche angeordneten Bahnführungsschienen an denen je eine Greifereinheit angeordnet ist, wobei die Greifereinheit entlang der Bahnführungsschiene beweg- und positionierbar ist, wobei die Greifereinheit die folgenden Schritte ausführt
   - Greifen oder Festhalten des freien Endes des der Greifereinheit zugeordneten Faserrovings und Übernehmen des freien Endes von der Übergabeeinrichtung,
   - Aufspannen des ihr zugeordneten Faserrovings über der Ablagefläche, indem sich die Greifereinheit, während diese das freie Ende festhält, entlang ihrer Bahnführungsschiene relativ von der Übergabeeinrichtung bis zu einer gewünschten Endposition weg bewegt und hierbei auf den zugeordneten Faserroving eine Zugkraft in seiner Längsrichtung ausgeübt wird, sowie
   - Freigeben und Ablegen des freien Endes auf der Ablagefläche an der Endposition des Greifers,
- Bereitstellen je einer Schneideinheit pro Bahnführungsschiene, welche den Schritt ausführt
   - Durchtrennen des der Greifereinheit zugeordneten aufgespannten Faserrovings an einer, zwischen der Übergabeeinichtung und der Endposition der Greifereinheit angeordneten Schneidposition zur Ausbildung des Abschnitts des jeweiligen Faserrovings,

Das Verfahren ist dadurch gekennzeichnet, dass Bahnführungsschienen vorgesehen sind, an denen zusätzlich zu der Greifereinheit je eine Schneideinheit angeordnet ist, wobei der Greifereinheit und der Schneideinheit der Bahnführungsschiene einer der Faserrovings gemeinsam zugeordnet ist, um diesen gemeinsam zugeordneten Faserroving zu bearbeiten, und wobei die Greifereinheit und die Schneideinheit einer Bahnführungsschiene entlang der Bahnführungsschiene unabhängig voneinander beweg- und positionierbar sind.

Zu bemerken ist in diesem Zusammenhang, dass beim Durchtrennen eines Faserrovings zur Bildung des Abschnitts wieder ein neues freies Ende des Faserrovings gebildet wird, welches wieder durch die Übergabeeinrichtung gehalten wird und für die Bildung des nächsten Abschnitts der Greifereinheit zur Verfügung gestellt werden kann.

Durch das Zusammenwirken von Greifereinheit, Schneideinheit und Übergabeeinrichtung bei der Bearbeitung des zugeordneten Faserrovings können somit aus dem Faserroving Abschnitte des Faserrovings mit gewünschter Länge erzeugt werden und diese Abschnitte können an einer gewünschten Stelle entlang der Bewegungsbahn der jeweiligen Bahnführungsschiene auf der Ablagefläche abgelegt werden. Da dies insbesondere für mehrere Faserrovings der Fall ist, können hierdurch mehrere solcher Abschnitte von Faserrovings, d.h. mit jeweils gewünschter Länge, auf der Ablagefläche an gewünschten Stellen nebeneinander und/oder übereinander abgelegt werden. Hierdurch kann mit geringem Verschnitt ein textiles Flächengebilde mit einer konturnahen Form -entsprechend dem herzustellenden Faserverbundbauteil- geschaffen werden, welches mehrere auf der Ablagefläche nebeneinander und/oder übereinander abgelegte Faserroving-Abschnitte umfasst. Die erfindungsgemäße Lösung ermöglicht somit eine ressourcensparende Herstellung von "endkonturnahen" textilen Flächengebilden. Durch mehrfaches Ablegen von Abschnitten übereinander können mehrlagige Flächengebilde hergeststellt werden.

Durch die individuelle Positionierung einzelner unidirektioinaler Abschnitte der Faserstreifen bzw. Faserrovings kann der Faseraubau in Form (z.B. Kontur eines Kotflügels) und auch der Orientierung (unterschiedliche Ausrichtung der Fasern zum Aufbau eines Lastpfadgerechten Bauteils) weitestgehend frei gestaltet werden. Das bedeutet, dass keine Konturen aus Rollenware (Gewebe/Gelege/Prepreg) ausgeschnitten werden müssen, sondern direkt nahe der End-Kontur das textile Flächengebilde aufgebaut werden kann und somit weniger Verschnitt anfällt. Des Weiteren können auch lokale Verstärkungen, z.B. an besonders belasteten Krafteinleitungspunkten, gezielt positioniert werden.

Im Sinne dieser Erfindung ist unter dem Begriff Faserroving ein Bündel, Strang oder Multifilamentgarn aus parallel angeordneten Filamenten (Endlosfasern) zu verstehen. Insbesondere ist darunter auch ein Faserband aus mehreren nebeneinander angeordneten Bündeln von Fasern zu verstehen. So ein Faserband kann mit einer Greifereinheit bearbeitet werden. Der Begriff Faserroving ist im Sinne der Erfindung weit auszulegen und inbesondere nicht darauf beschränkt, dass der Faserroving auf einer Spule aufgewickelt vorliegt. Im Sinne der Erfindung, sind ferner die Begriffe Faserroving, Faserstreifen oder Faserband gleichbedeutend zu verstehen. Faserrovings bestehen aus einer Vielzahl von einzelnen Filamenten. Entsprechend der Anzahl der Einzelfilamente werden diese bspw. als 12K Faserrovings, stehend für einen Faserroving aus 12000 Einzelfilamenten, oder bspw. als 50K Faserrovings, stehend für einen Faserroving aus 50000 Einzelfilamenten, bezeichnet. Bevorzugt handelt es sich hierbei um Carbonfasern, Glasfasern oder Aramidfasern.

Es ist ferner anzumerken, dass es sich bei dem Faserroving um einen handeln kann, der entweder trocken, oder mit Binder versehen oder auch mit Matrixmaterial getränkt bzw. vorimprägniert ist. Hier wird keine Unterscheidung in der Bezeichnung gemacht.

Es ist zu bemerken, dass im Sinne der Erfindung es sowohl möglich ist, dass
- nur eine einzige Übergabeeinheit vorgesehen ist, welche die freien Enden sämtlicher Faserrovings den jeweiligen Greifern bereitstellt. In diesem Fall gibt es mehrere Greifereinheiten denen jeweils ein Faserroving zugeordnet ist (siehe bevorzugte Ausführungsform nach Patentanspruch 2) oder aber
- jedem Faserroving oder einer Gruppe von Faserrovings eine eigene Übergabeeinheit zugeordnet ist, sodass jede Greifereinheit das freie Ende des Faserrovings oder der Gruppe von Faserrovings von der diesem Faserroving zugeordneten Übergabeeinheit übernimmt. In diesem Fall gibt es mehrere Greifereinheiten, denen jeweils ein Faserroving zugeordnet ist. Wobei ein Faserroving selbst im Sinne der Erfindung aus mehreren Faserbündeln bestehen kann.

Es ist ferner zu bemerken, dass unter das Anspruchsmerkmal dass *"die Greifereinheit, während diese das freie Ende festhält, [sich] entlang der Bahnführungsschiene relativ zur Übergabeeinrichtung bis zu einer gewünschten Endposition von dieser [der Übergabeeinrichtung] weg bewegt"* so weit zu verstehen ist, dass die Relativbewegung zwischen Greifereinheit und Übergabeeinheit gemeint ist. Diese Relativbewegung kann bspw. dadurch bewirkt werden, indem sich die Greifereinheit bewegt und die Übergabeeinrichtung sich nicht bewegt und sich dadurch der Abstand zwischen den beiden vergrößert. Diese Relativbewegung kann auch dadurch bewirkt werden, indem sich die Greifereinheit nicht bewegt und die Übergabeeinrichtung sich bewegt und sich dadurch der Abstand zwischen den beiden vergrößert. Diese Relativbewegung kann ferner dadurch bewirkt werden, indem sich die Greifereinheit und die Übergabeeinrichtung mit unterschiedlichen Geschwindigkeiten und/oder Richtungen relativ zueinander bewegen und sich dadurch der Abstand zwischen den beiden vergrößert.

Der Begriff Greifereinheit soll im Sinne der Erfindung weit ausgelegt werden und soll eine Vorrichtung beschreiben, mittels der das jeweilige freie Ende aufgenommen, festgehalten und wieder freigegeben werden kann. Mögliche Mechanismen hierfür können das Festhalten durch Klemmen des Faserrovings, das Festhalten durch Ansaugen des Faserrovings mittels einer Unterdruckquelle, das Festhalten mittels Adhäsion usw. umfassen.

Vorteilhafte Ausgestaltungen und Weiterbildungen der Erfindung sind in den Unteransprüchen angegeben.

Nach einer besonders bevorzugten Ausgestaltung der Erfindung ist vorgesehen, dass mehrere in Bezug zur Ablagefläche nebeneinander angeordnete und über der Ablagefläche angeordnete Bahnführungsschienen vorgesehen sind, an denen jeweils eine Greifereinheit und eine Schneideinheit angeordnet ist, wobei jede Greifereinheit entlang ihrer Bahnführungsschiene unabhängig von den Greifereinheiten der anderen Bahnführungsschienen beweg- und positionierbar ist, wobei jede Schneideinheit entlang ihrer Bahnführungsschiene unabhängig von den Schneideinheiten der anderen Bahnführungsschiene beweg- und positionierbar ist, wobei die an einer jeweiligen Bahnführungsschiene angeordnete Greifereinheit und Schneideinheit entlang ihrer Bahnführungsschiene unabhängig voneinander bewegund positionierbar sind und der Greifereinheit und Schneideinheit einer jeweiligen Bahnführungsschiene jeweils ein Faserroving gemeinsam zugeordnet ist, um diesen gemeinsam zugeordneten Faserroving zu bearbeiten.

Im Sinne dieser Ausführungsform ist demgemäß insbesondere vorgesehen:
▪ mehrere in Bezug zur Ablagefläche nebeneinander angeordneteBahnführungsschienen, an denen jeweils eine Greifereinheit und eine Schneideinheit angeordnet ist, zur gemeinsamen Bearbeitung jeweils eines gemeinsam zugeordneten Faserrovings, sowie
▪ eine Bevorratungsvorrichtung zur Bevorratung der Faserrovings und zumindest eine Übergabeeinrichtung zur Bereitstellung des freien Endes des jeweiligen Faserrovings
▪ wobei jede der Greifereinheiten ausgelegt ist den ihr zugeordneten Faserroving an seinem freien Ende festzuhalten und das freie Ende wieder freizugeben,
▪ wobei jede der Greifereinheiten entlang ihrer Bahnführungsschiene unabhängig von den Greifereinheiten der anderer Bahnführungsschienen beweg- und positionierbar ist,
▪ wobei jede der Schneideinheiten ausgelegt ist den zugordneten Faserroving zu durchtrennen,
▪ wobei jede der Schneideinheiten entlang ihrer Bahnführungsschiene unabhängig von den Schneideinheiten der anderer Bahnführungsschienen beweg- und positionierbar ist,
▪ wobei die zumindest eine Übergabeeinrichtung ausgelegt ist die zugeordneten Faserrovings festzuhalten und wieder freizugeben,
▪ wobei die Greifereinheit und die Schneideinheit der jeweiligen Bahnführungsschiene entlang ihrer Bahnführungsschiene unabhängig voneinander beweg- und positionierbar sind, und
▪ wobei die Greifereinheit, und die Schneideinheit der jeweiligen Bahnführungsschiene sowie die zumindest eine Übergabeeinrichtung ausgelegt sind derart miteinander zusammenzuarbeiten um
   ∘ den zugeordneten Faserroving zwischen der Greifereinheit und der Übergabeeinrichtung aufzuspannen in dem die Greifereinheit das freie Ende greift und die Übergabeeinheit dieses freigibt, während sich die Greifereinheit relativ zur Übergabeeinrichtung von dieser weg bis zu einer Endposition bewegt und
   ∘ aus dem aufgespannten Faserroving den Abschnitt mit einer gewünschten Länge zu bilden und diesen auf der Ablagefläche an einer gewünschten Stelle abzulegen, indem die Schneideinheit den aufgespannten Faserroving an einer zwischen der Greifereinheit und der Übergabeeinrichtung angeordneten Schneidposition durchtrennt und die Greifereinheit das freie Ende an der Endposition freigibt, wobei die gewünschte Länge des Abschnitts durch den Abstand (entlang der Länge des Faserrovings) zwischen der Endposition und der Schneidposition und die gewünschte Stelle durch die Endposition und die Schneidposition relativ zur Ablagefläche bestimmt wird.

Durch diese Ausführungsform können für mehrere verschiedene Greifereinheiten zugeordnete Faserrovings gleichzeitig oder in sehr kurzer zeitlicher Abfolge verschiedene Abschnitte gebildet werden, die auf der Ablagefläche nebeneinander abgelegt werden. Hierdurch kann die Produktivität der erfindungsgemäßen Vorrichtung deutlich gesteigert werden.

Die Bahnführungsschienen verlaufen insbesondere parallel zueinander, so dass die durch die zugeordneten Greifereinheiten und Schneideinheiten gebildeten Abschnitte der Faserrovings auf einfache Art und Weise parallel nebeneinander abgelegt werden können. Eine konstruktiv einfache Ausgestaltung sieht in diesem Zusammenhang vor, dass die Bahnführungsschienen bevorzugt paralle, besonders bevorzugt geradlinig parallel zueinander verlaufen. Eine weitere konkrete Ausgestaltung sieht ferner vor, dass die Bahnführungsschienen in einer Ebene verlaufen, die parallel zur Ablagefläche ist oder die zumindest eine Komponente parallel zur Ablagefläche hat.

Vorzugsweise ist vorgesehen, dass die gewünschte Endposition der Greifereinheit und/oder die gewünschte Schneidposition der Schneideinheit, die beide an derselben Bahnführungsschiene angeordnet sind, jeweiligen über der Ablagefläche angeordnet sind. Durch diese Maßnahmen allein oder in Kombination wird sichergestellt, dass das textile Flächengebilde vollständig auf der Ablagefläche abgelegt wird. Hierdurch wird sichergestellt, dass kein Abschnitt eines Faserrovings teilweise über die Ablagefläche übersteht, was die Gefahr eines Verrutschens der auf der Ablagefläche abgelegten Abschnitte der Faserrovings reduziert und damit das Handling mit der Vorrichtung verbessert.

Vorzugsweise ist eine Steuerungseinrichtung vorgesehen, welche die Greifer- und Schneideinheiten jeder der mehreren Bahnführungsschienen derart unabhängig voneinander steuert, dass für den jeweils zugeordneten Faserroving die Schneidposition und die Endposition entsprechend der gewünschten Länge des Abschnitts des jeweiligen Faserrovings und dessen Position auf der Ablagefläche angefahren werden kann oder wird. Mit dieser Steuerungseinrichtung ist es möglich, das textile Flächengebilde mit der gewünschten Form voll automatisiert herzustellen. Denkbar ist in diesem Zusammenhang insbesondere, dass die Steuerungseinrichtung auf Basis von CAD-Daten oder frei programmierbaren oder maschinenlesbaren Daten der Streifenposition als Eingangsparameter des herzustellenden Faserverbundbauteils und/oder textilen Flächengebildes den Ablege- und Schneidprozess der Greifereinheiten und Schneideinheiten steuert, insbesondere die individuelle Positionierung der Greifereinheiten und Schneideinheiten, deren Wechselwirkung miteinander, insbesondere im Hinblick auf das Freigeben der freien Enden und das Durchtrennen des bzw. der aufgespannten Faserrovings, die zeitliche Abfolge der Ablage der einzelnen Abschnitte der Faserrovings auf der Ablagefläche.

Abhängig von der gewünschten Form bzw. Kontur des herzustellenden textilen Flächengebildes, insbesondere abhängig davon, ob und in welchem Maße dieses 3-dimensional gekrümmt ausgebildet sein soll bzw. nachfolgend 3-dimensional drapiert werden soll, kann es sinnvoll sein, dass die Ablagefläche eben oder gekrümmt ausgebildet ist. Denkbar ist auch, die erfindungsgemäße Vorrichtung mit einer auswechselbaren Ablagefläche auszustatten, so dass diese auf einfache Art und Weise gewechselt werden kann. Dies kann bspw. sinnvoll sein, wenn zwischen einer ebenen und gekrümmten Ablagefläche gewechselt werden soll oder aber zur Steigerung der Produktivität, wenn bspw. die Ablagefläche zum Transport des auf ihr gebildeten textilen Flächengebildes dient um bspw. das textile Flächengebilde ohne Umsetzen auf eine andere Unterlage auf der Ablagefläche einem nachfolgenden Prozessschritt, wie bspw. Umformen, bereitzustellen.

Um die Abschnitte der Faserrovings auf einfache Art und Weise in verschiedenen Ablagewinkeln relativ zueinander aufeinander ablegen zu können, ist nach einer besonders bevorzugten Ausgestaltung der Erfindung vorgesehen, dass die Ablagefläche um eine schräg, insbesondere senkrecht, zu dieser verlaufende Drehachse drehbar ist. Durch diese Maßnahme ist die Ablagefläche relativ zu den translatorisch bewegbaren Greifereinheiten und Schneideinheiten drehbar, woraus ein hoher Freiheitsgrad bei der Ablage der Abschnitte der Faserrovings entsteht.

Alternativ oder zusätzlich kann vorgesehen sein, dass die Ablagefläche translatorisch relativ zu der bzw. den Bahnführungsschiene(n) bewegbar ist, wobei sich die Richtung der translatorischen Bewegung insbesondere schräg, insbesondere senkrecht, zur Längsrichtung der zumindest einen Bahnführungsschiene erstreckt. Insbesondere bei der zur drehbaren Lagerung der Ablagefläche zusätzlichen translatorischen Bewegbarkeit der Ablagefläche können hierdurch die Freiheitsgrade bei der Ablage der Abschnitte der Faserrovings weiter erhöht werden. Die translatorische Bewegbarkeit der Ablagefläche ist insbesondere dann von Vorteil, wenn die Vorrichtung nur eine (einzige) Bahnführungsschiene mit Greifereinheit und Schneideinheit umfasst, da hierdurch die Ablagefläche verschiedene Positionen relativ zur Bahnführungsschiene anfahren kann und dadurch die mehreren Abschnitte nebeneinander auf der Ablagefläche abgelegt werden können.

Vorzugsweise ist ferner vorgesehen, dass die Niederhalter der Greifereinheit und der Schneideinheit, welche an derselben Bahnführungsschiene angeordnet sind, derart ausgelegt und steuerbar sind, dass diese den Faserroving gleichzeitig gegen die Ablagefläche drücken.

Insbesondere sind Niederhalter der Greifeinheiten und/oder die Niederhalter der Schneideinheiten so ausgebildet, dass sie jeweils alle Fasern des zugeordneten Faserrovings gleichzeitig an die Ablagefläche drücken können.

Bevorzugt sind die Greifeinheiten so ausgelegt, dass sie jeweils alle Fasern des ihr zugeordneten Faserrovings gleichzeitig greifen oder klemmen können.

Wie bereits vorher erläutert kann es möglich sein, dass die Vorrichtung nur eine einzige Übergabeeinrichtung umfasst, der alle Faserrovings zugeordnet sind oder aber mehrere Übergabeeinrichtungen, denen jeweils einer oder mehrere Faserrovings zugeordnet ist. Um die Flexibilität beim Handling zu erhöhen ist es insbesondere sinnvoll, wenn zumindest einer der Schneideinheiten eine eigene Übergabeeinheit zugeordnet ist, insbesondere wenn allen Schneideinheiten jeweils eine eigene Übergabeeinheit mit jeweiliger Halteeinrichtung, bspw. in Form einer Klemmeinrichtung, zugeordnet ist, wobei die jeweilige Halteeinrichtung ausgelegt ist, das freie Ende des jeweils zugeordneten Faserrovings festzuhalten und wieder freizugeben. In diesem Zusammenhang ist es insbesondere sinnvoll, wenn die Halteeinrichtungen jeweils unabhängig voneinander steuerbar sind. Wie bereits angedeutet, kann die Halteeinrichtung als Klemmeinrichtung ausgeführt sein, welche den jeweils zugeordneten Faserroving) durch Klemmung festhält. Denkbar ist aber auch, dass die Halteeinrichtung mit Unterdruck arbeitet und den zugeordneten Faserroving durch Unterdruck festhält.

Eine darauf aufbauende weitere besonders bevorzugte Ausgestaltung der Erfindung sieht vor, dass zumindest eine der Schneideinheiten und die zugeordnete Übergabeeinheit als eine Baugruppe ausgeführt sind, insbesondere dass alle Schneideinheiten und die jeweils zugeordnete Übergabeeinheit jeweils als eine Baugruppe ausgeführt sind. Die eine Schneideeinheit und eine Übergabeeinheit umfassende Baugruppe ist hierbei entlang der jeweiligen Bahnführungsschiene unabhängig von den Baugruppen der anderen Bahnführungsschienen beweg- und positionierbar. Ferner ist die die Schneideeinheit und die Übergabeeinheit umfassende Baugruppe entlang der jeweiligen Bahnführungsschiene unabhängig von der Greifereinheit dieser Bahnführungsschiene beweg- und positionierbar.

Eine weitere Ausgestaltung der Erfindung sieht vor, dass die Halteeinrichtung das freie Ende des bzw. der Faserrovings so lange festhält bis es die zugeordnete Greifereinheit greift.

Das Zusammenwirken einer an derselben Bahnführungsschiene angeordneten Greifereinheit mit Niederhalter, Schneideinheit mit Niederhalter und Übergabeeinheit mit Halteeinrichtung kann bspw. wie folgt erfolgen:
Die Greifereinheit spannt den Faserroving in unidirektionaler Richtung über der Ablagefläche auf. Hierzu holt die Greifereinheit das freie Ende des Faserrovings oder Faserbands von der Übergabeeinrichtung ab. Die Halteeinrichtung wird geöffnet und dadurch wird das Faserband zum Abzug frei gegeben, während sich die Greifereinheit von der Baugruppe mit Schneideinheit und Übergabeeinrichtung weg bewegt. Das Faserband wird gegebenenfalls über eine weitere -später noch zu erläuternde- Einrichtung auf Spannung gehalten. Die Greifereinheit und die Baugruppe mit Schneideinheit und Übergabeeinrichtung fahren auf entsprechende Ablegeposition und die beiden Niederhalter, d.h. der Niederhalter der Greifereinheit und der Niederhalter der Schneideinheit, drücken das Faserband auf die ggf. nach oben gefahrene Ablagefläche. Die Schneideinheit durchtrennt das Faserband an der Schneidposition, wodurch der Faserband - Abschnitt gebildet wird. Vor dem Durchtrennen hat die Halteeinrichtung geschlossen, um das Faserband vor dem Durchtrennen festzuhalten. Anschließend bzw. gleichzeitig öffnet die Greifereinheit und der gebildete Abschnitt des Faserbands liegt auf der Ablagefläche.

Vorzugsweise ist vorgesehen, dass, wenn sich die Greifereinheit mit festgehaltenem freien Ende des Faserrovings relativ von der Übergabeeinrichtung bis zu einer gewünschten Endposition weg bewegt und hierbei eine Zugkraft auf den Faserroving ausgeübt wird, ein Teil des Faserrovings aus der Bevorratungssvorrichtung entnommen wird. In diesem Fall kann, durch den Aufspannvorgang des Faserrovings, gleichzeitig eine teilweise Entnahme des Faserrovings aus der Bevorratungssvorrichtung bewirkt werden.

Eine konkrete Ausgestaltung der Erfindung sieht ferner vor, dass die Bevorratungsvorrichtung zumindest eine Abwicklungsstation umfasst, von der bzw. denen der bzw. die in aufgewickelter Form vorliegenden Faserroving(s) abwickelbar sind. Hierbei ist insbesondere jeder Abwickelstation ein auf einer Spule aufgewickelter Faserroving zugeordnet. Die Abwickelstation(en) kann bzw. können bspw. ein Spulengatter umfassen, zur Halterung und zum Abwickeln der einzelnen auf Spulen aufgewickelten Faserrovings.

Vorzugsweise hat die Bevorratungsvorrichtung eine Spannungs-Steuerungsund/oder Regelungseinrichtung, durch welche die Zugspannung der einzelnen Faserbänderindividuell regel- und/oder steuerbar ist.

Nach einer besonders bevorzugten Ausgestaltung der Erfindung umfasst die Bevorratungsvorrichtung ferner einen dem jeweiligen Faserroving zugeordneten Pufferspeicher, der in Längsrichtung des Faserrovings betrachtet zwischen der Übergabeeinrichtung und der Abwickelstation des Faserrovingss angeordnet ist. Der Pufferspeicher ist hierbei ausgelegt, um den zyklischen Abzug des Faserrovings durch die Greifereinheit und das mit nahezu konstanter Geschwindigkeit erfolgende Abwickeln des Faserrovingss durch die Abwickelstation zu entkoppeln. Im Ergebnis wird also der von der Abwickelstation abgewickelte Teil des Faserrovingss im Pufferspeicher gespeichert und kann durch die zyklisch arbeitende Greifereinheit aus dem Pufferspeicher entnommen werden. Es gibt verschiedene Möglichkeiten zur konkreten Ausbildung des Pufferspeichers. In einer konstruktiv einfachen aber sehr effektiven Form kann der Pufferspeicher eine Anordnung aus zumindest zwei Reihen von Umlenkrollen umfassen, um die der Faserroving abwechselnd mäandrierend um eine Umlenkrolle der einen Reihe und um eine Umlenkrolle der anderen Reihe geführt wird, wobei die beiden Reihen von Umlenkrollen durch Federkraft und/oder Gewichtskraft voneinander weggedrückt werden. Wird ein Teil des Faserrovings von der Abwickelstation abgewickelt und in den Pufferspeicher geführt, bewegen sich die beiden Reihen aus Umlenkrollen durch Feder- und/oder Gewichtskraft bewirkt voneinander weg. Durch das voneinander Wegbewegen wird die Strecke zwischen den Reihen aus Umlenkrollen vergrößert und der Pufferspeicher kann mehr von dem Faserroving aufnehmen. Bei der Entnahme eines Teils des Faserrovings aus der Bevorratungsvorrichtung durch die Greifereinheit beim Aufspannen des Faserrovings wird eine Zugspannung auf den Faserroving ausgeübt durch welche sich der Abstand zwischen den beiden Reihen aus Umlenkrollen verringert. Der Pufferspeicher kann gleichzeitig als Spannungs-Steuerungs- und/oder Regelungseinrichtung zur Steuerung und Regelung der Zugspannung des Faserrovings dienen. Die Idee des Pufferspeichers kann auch ein unabhängiger Aspekt der Erfindung und daher Gegenstand eines unabhängigen Patentanspruchs sein.

Um das nachfolgende Handling des aus den abgelegten Abschnitten des bzw. der Faserrovings gebildeten textilen Flächengebildes zu verbessern ist es sinnvoll, wenn die einzelnen Fasern des bzw. der Faserrovings und die verschiedenen nebeneinander abgelegten Abschnitte des bzw. der Faserrovings mittels eines Binders aneinander fixiert sind. Der Binderauftrag kann hierbei auf das bereits gebildete textile Flächengebilde erfolgen oder aber auf den bzw. die Faserroving(s) bevor das textile Flächengebilde gebildet wird. Hierzu kann es insbesondere sinnvoll sein, wenn die Bevorratungsvorrichtung eine Binderauftragsvorrichtung umfasst, mittels der Binder, bspw. in flüssiger oder insbesondere pulverförmiger Form, auf den zumindest einen Faserroving aufbringbar ist, bevor der zumindest eine Faserroving die Bevorratungsvorrichtung verlässt. Um die Anhaftung des Binders an dem bzw. den Faserroving(s) zu verbessern ist es insbesondere sinnvoll, wenn die Bevorratungsvorrichtung eine der Binderauftragsvorrichtung nachgeschaltete Wärmeeinrichtung umfasst, mittels der der aufgebrachte Binder anschmelzbar ist.

Die Erfindung wird weiter anhand von schematischen Zeichnungen weiter erläutert. Es zeigen, die
- Figur 1: eine erfindungsgemäße Vorrichtung in Seitenansicht in verschiedenen Positionen bei der Bildung eines Abschnitts eines Faserrovings,
- Figur 2: die Vorrichtung der Figur 1 in Draufsicht von Oben auf die Ablagefläche,
- Figur 3: eine erste Lage eines mit der erfindungsgemäßen Vorrichtung der Figuren 1 und 2 hergestellten textilen Flächengebildes,
- Figur 4: eine weitere erfindungsgemäße Vorrichtung in Draufsicht von Oben auf die Ablagefläche und
- Figur 5: eine erste Lage eines mit der erfindungsgemäßen Vorrichtung der Figur 4 hergestellten textilen Flächengebildes.

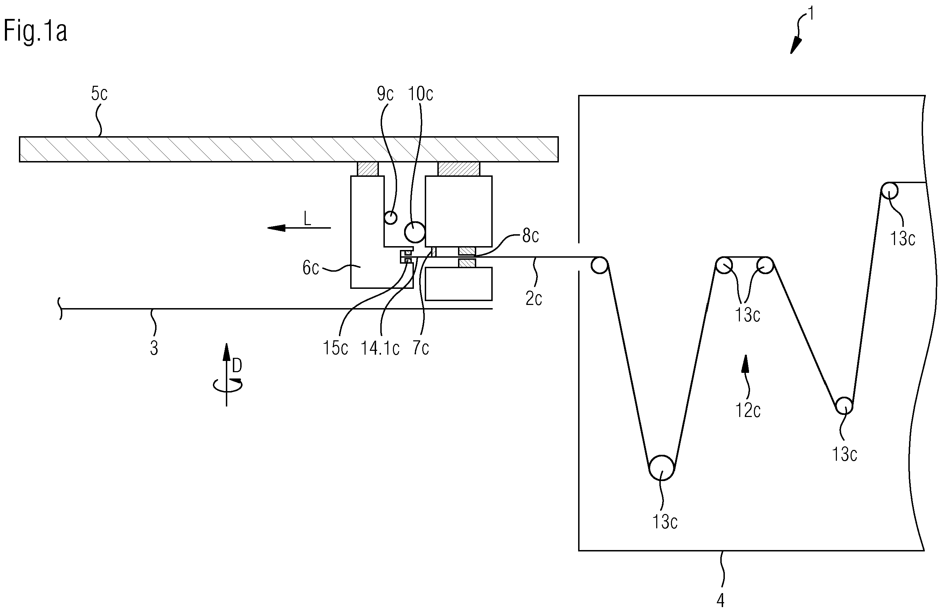

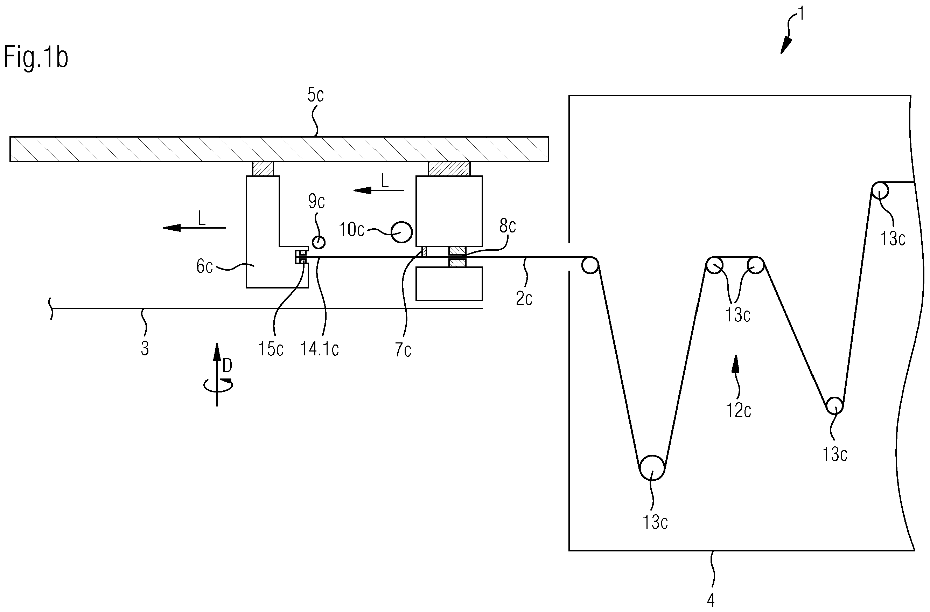

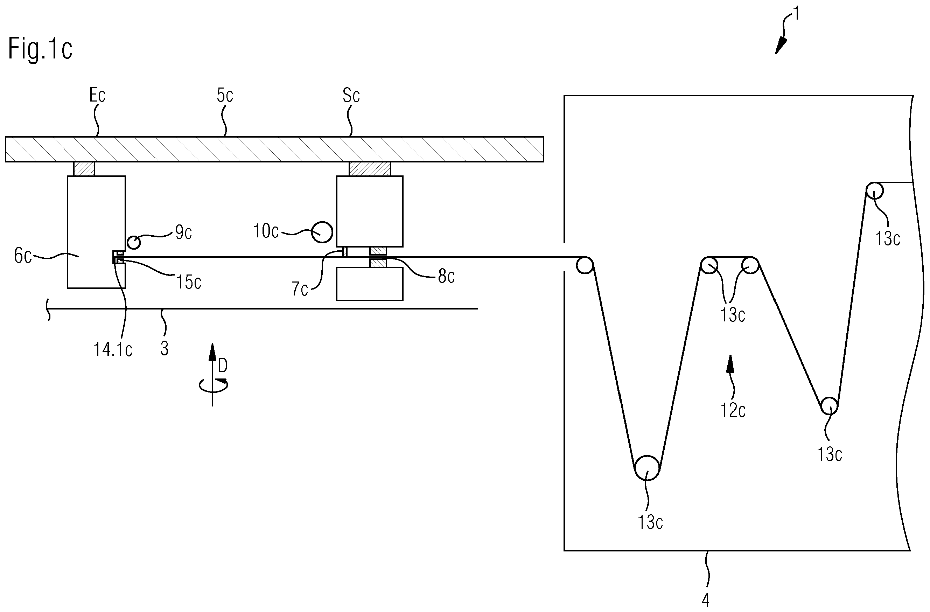

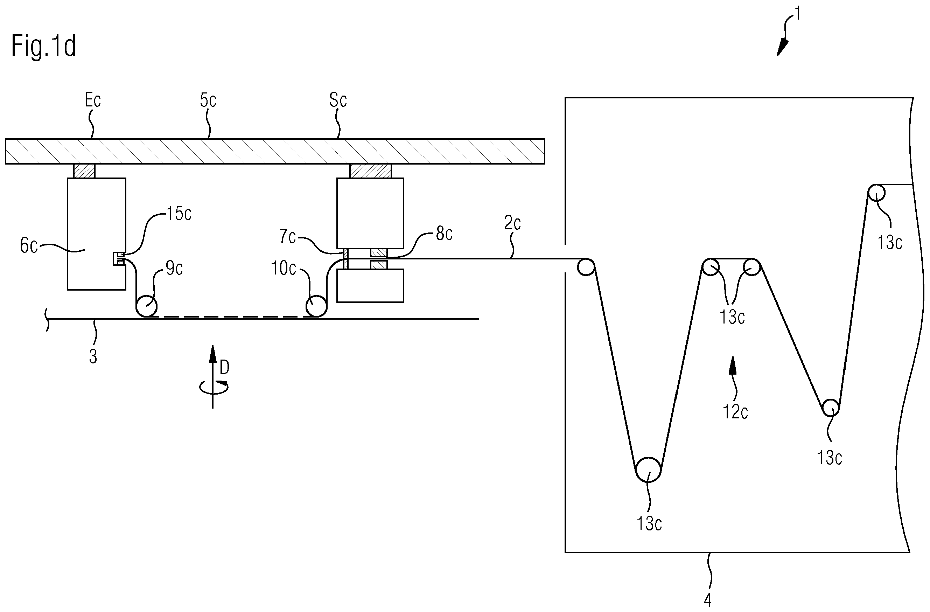

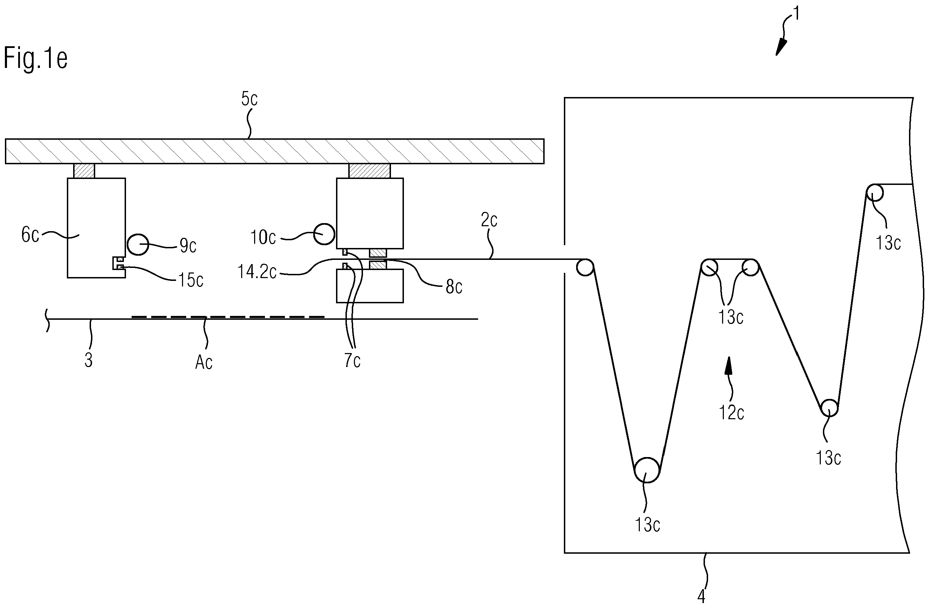

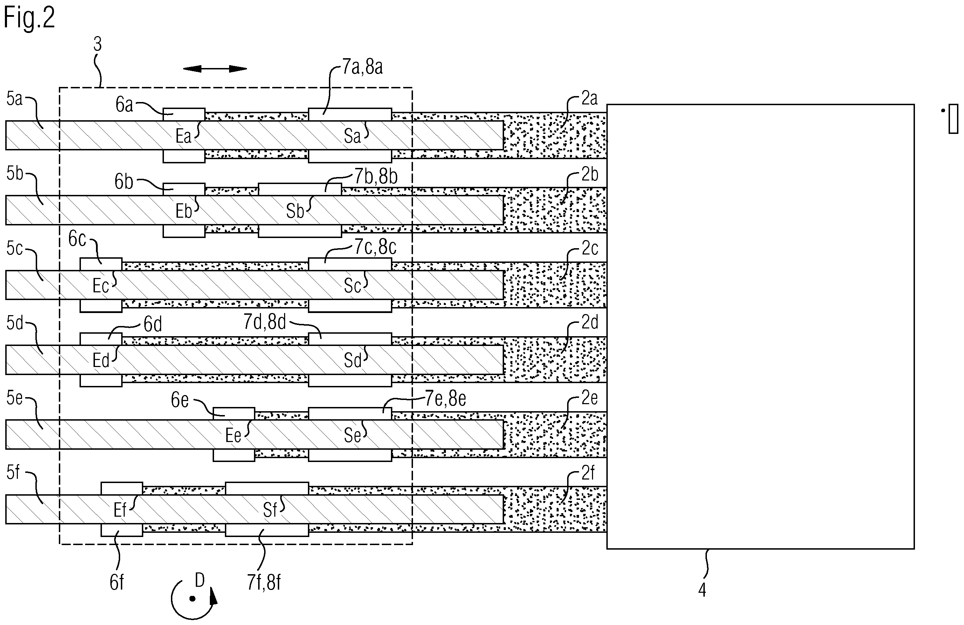

Die Figuren 1 und 2 zeigen eine erste Ausführungsform einer erfindungsgemäßen Vorrichtung 1 in Seitenansicht und in Draufsicht. Die Vorrichtung 1 ist ausgelegt zur Herstellung von textilen Flächengebilden, welche mehrere nebeneinander abgelegte Abschnitte mehrerer unidirektionaler Faserrovings 2a - 2f umfassen. Die Figur 1 zeigt die Vorrichtung 1 im Bereich des Faserrovings 2c.

Wie aus der Darstellung der Figuren 1 und 2 zu erkennen ist, umfasst die Vorrichtung 1 eine Ablagefläche 3 auf der die Abschnitte der Faserrovings 2a - 2f abgelegt werden. Die Ablagefläche 3 ist vorliegend eben ausgebildet und um eine senkrecht ihr verlaufende Drehachse D drehbar gelagert.

Des Weiteren umfasst die Vorrichtung 1 eine Bevorratungsvorrichtung 4 zur Bereitstellung der Faserrovings 2a - 2f sowie für jeden der Faserrovings 2a - 2f eine Übergabeeinrichtung 8a - 8f zur Bereitstellung des freien Endes 14.1a - 14.1f des jeweiligen Faserrovings 2a - 2f. Vorliegend umfasst die Bevorratungsvorrichtung 4 mehrere jeweils eine Anordnung von Rollen 13c umfassende Abwicklungsstationen 12c, von denen jeweils eine einem Faserroving 2a - 2f zugeordnet ist und von welcher der in aufgewickelter Form vorliegende Faserroving 2a - 2f abwickelbar ist. Ferner haben die Abwickelstationen jeweils eine Spannungs-Steuerungs- und/oder Regelungseinrichtung zur Regelung und/oder Steuerung der Zugspannung des zugeordneten Faserrovings 2a - 2f wobei insbesondere die Zugspannung für jeden Faserroving unabhängig regel- und/oder steuerbar ist.

Die Vorrichtung 1 umfasst ferner mehrere in Bezug zur Ablagefläche 3 nebeneinander und oberhalb der Ablagefläche 3 angeordnete Bahnführungsschienen 5a - 5f, denen jeweils eine Greifereinheit 6a - 6f und eine Schneideinheit 7a - 7f zugeordnet ist. Jedem Paar aus Greifereinheit 6a- 6f und Scheideinheit 7a- 7f, welches gemeinsam an einer der Bahnführungsschienen 5a -5f angeordnet ist, ist einem der Faserrovings 2a - 2f zur gemeinsamen Bearbeitung zugeordnet. So ist bspw. der Greifereinheit 6c und der Schneideinheit 7c der Bahnführungsschiene 5c der Faserroving 2c zur gemeinsamen Bearbeitung zugeordnet. Ferner ist jeder Bahnführungsschiene 5a - 5f eine der Übergabeeinrichtungen 8a- 8f zur Bereitstellung des freien Endes 14.1a - 14.1f des jeweiligen Faserrovings 2a - 2f zugeordnet. Vorliegend sind die einer jeweiligen Bahnführungsschiene 5a - 5f zugeordnete Schneideinheit 7a - 7f und Übergabeeinheit 8a - 8f jeweils als eine als eine Baugruppe ausgeführt.

Wie aus der Darstellung der Figur 1 zu erkennen ist, ist jede der Greifereinheiten 6a - 6f ausgelegt den zugeordneten Faserroving 2a - 2f an seinem freien Ende 14.1a - 14.1f festzuhalten und das freie Ende 14.1a - 14.1f wieder freizugeben. Ferner ist jede der Greifereinheiten 6a - 6f entlang ihrer Bahnführungsschiene 5a - 5f unabhängig von den Greifereinheiten 6a - 6f der anderer Bahnführungsschienen 5a - 5f beweg- und positionierbar. Des Weiteren ist jede der Schneideinheiten 7a - 7f ausgelegt, den zugordneten Faserroving 2a - 2f zu durchtrennen, wobei jede der Schneideinheiten 7a - 7f entlang ihrer Bahnführungsschiene 5a - 5f unabhängig von den Schneideinheiten 7a - 7f der anderer Bahnführungsschienen 5a - 5f beweg- und positionierbar ist. Ferner ist jede der Übergabeeinrichtungen 8a - 8f ausgelegt, den zugeordneten Faserroving 2a - 2f festzuhalten und wieder freizugeben. Darüber hinaus sind die Greifereinheit 6a - 6f und die Schneideinheit 7a - 7f der jeweiligen Bahnführungsschiene 5a - 5f entlang ihrer Bahnführungsschiene 5a - 5f unabhängig voneinander beweg- und positionierbar.

Ferner verlaufen die Bahnführungsschienen 5a - 5f geradlinig parallel in einer Ebene die parallel zur Ablagefläche 3 ist.

Wie aus der Darstellung der Figur 1 zu entnehmen ist, hat jede Greifereinheit 6a - 6f einen Niederhalter 9a - 9f, mit dem der zugeordnete Faserroving 2a - 2f im Bereich der jeweiligen entlang der jeweiligen Bahnführungsschiene 5a - 5f frei wählbaren Endposition Ea - Ef gegen die Ablagefläche 3 gedrückt werden kann. Ferner hat jede Schneideinheit 7a - 7f einen Niederhalter 10a - 10f, mit dem der zugeordnete Faserroving 2a - 2f im Bereich der entlang der jeweiligen Bahnführungsschiene 5a - 5f frei wählbaren Schneidposition Sa - Sf gegen die Ablagefläche 3 gedrückt werden kann.

Es ist anzumerken, dass die Greifereinheiten 6a - 6f und die Schneideinheiten 7a - 7f jeder der Bahnführungsschienen 5a - 5f derart unabhängig voneinander steuerbar sind, dass für den jeweils zugeordneten Faserroving 2a - 2f die Schneidposition Sa - Sf und die Endposition Ea - Ef entsprechend der gewünschten Länge des Abschnitts des Faserrovings 2a - 2f und dessen Position auf der Ablagefläche 3 angefahren wird.

Im Folgenden werden die verschiedenen Schritte bei der Erzeugung und der Ablage eines Abschnitts Ac des Faserrovings 2c genauer erläutert. Die in den Figuren 1a bis 1e gezeigten Schritte gelten entsprechend für die anderen Faserrovings 2a, 2b, 2d, 2e und 2f.

Sämtliche Bezugszeichen in Zusammenhang mit der Bearbeitung des Faserrovings 2c sind demzufolge mit einen "c" versehen.

Die Greifereinheit 6c holt das freie Ende 14.1c des Faserrovings 2c von der Übergabeeinrichtung 8c ab. Hierzu greift die Greifereinheit 6c das freie Ende 14.1c des Faserrovings 2c und eine Klemmeinrichtung 11c der Übergabeeinheit 8c gibt das freie Ende 14.1c frei (siehe Figur 1a). Die Klemmeinrichtung 11c ist eine spezielle Ausführung für die Halteeinrichtung.

Die Greifereinheit 6c spannt den Faserroving 2c in unidirektionaler Richtung in seiner Längsrichtung über der Ablagefläche 3 auf, indem sich die Greifereinheit 6c von der Baugruppe bestehend aus Schneideinheit 7c und Übergabeeinrichtung 8c (in Pfeilrichtung L) weg bewegt. Während der Bewegung der Greifereinheit 6c kann sich auch die Baugruppe aus Schneideinheit 7c und Übergabeeinheit 8c in Pfeilrichtung L bewegen (siehe Figur 1b). Durch das Wegbewegen der Greifereinheit 6c von der Übergabeeinrichtung 8c wird auf den Faserroving 2c eine Zugkraft in seiner Längsrichtung ausgeübt und vorliegend dadurch gleichzeitig ein Teil des Faserrovings 2c aus der Bevorratungssvorrichtung 4 entnommen.

Entsprechend der gewünschten Länge des zu bildenden Abschnitts Ac und dessen Position auf der Ablagefläche 3 bewegt sich die Greifereinheit 6c bis zu einer Endposition Ec und die Baugruppe aus Schneideinheit 7c und Übergabeeinrichtung 8c bewegt sich bis zu einer Position in der die gewünschte Schneidposition Sc erreicht wird (siehe Figur 1c).

Während den vorangehenden Schritten wird der Faserroving 2c auf Spannung gehalten.

Die beiden Niederhalter 9c, 10c, d.h. der Niederhalter 9c der Greifereinheit 6c und der Niederhalter 10c der Schneideinheit 7c, drücken den Faserroving 2c gleichzeitig auf die Ablagefläche 3 und die Schneideinheit 7c durchtrennt den Faserroving 2c an der zwischen der Endposition Ec der Greifereinheit 6c und der Übergabeeinrichtung 8c angeordneten Schneidposition Sc, wodurch der Abschnitt Ac des Faserrovings 2c sowie ein neues freies Ende 14.2c des Faserrovings 2c gebildet wird (siehe Figur 1d).

Die Greifereinheit 6c gibt das freie Ende 14.1c des Faserrovings 2c frei und der gebildete Abschnitt Ac des Faserrovings 2c liegt vollständig auf der Ablagefläche (siehe Figur 1e).

Ausgehend von dem neuen freien Ende 14.2c können zur Bildung eines weiteren Abschnitts aus dem Faserroving 2c die vorherigen Schritte wiederholt werden.

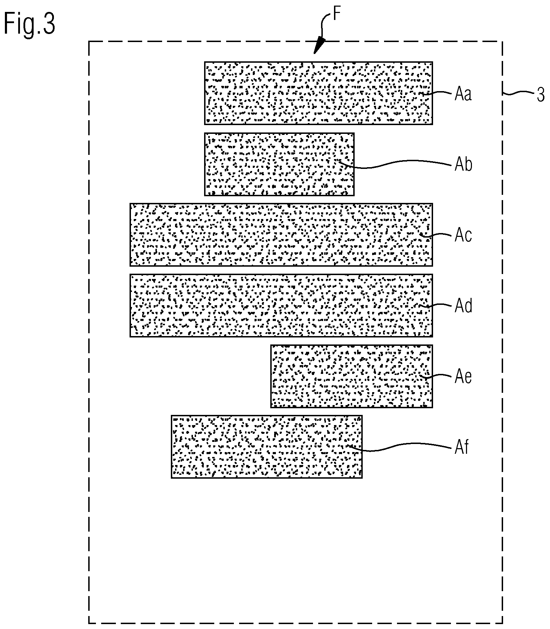

Die Figur 3 zeigt eine erste Lage eines mit der erfindungsgemäßen Vorrichtung der Figuren 1 und 2 hergestellten textilen Flächengebildes F. Man erkennt die auf der Ablagefläche 3 nebeneinander abgelegten Abschnitte Aa - Af der Faserrovings 2c, nämlich den aus dem Faserroving 2a gebildeten Abschnitt Aa, den aus dem Faserroving 2b gebildeten Abschnitt Ab, den aus dem Faserroving 2c gebildeten Abschnitt Ac, den aus dem Faserroving 2d gebildeten Abschnitt Ad, den aus dem Faserroving 2e gebildeten Abschnitt Ae sowie den aus dem Faserroving 2f gebildeten Abschnitt Af. Zu bemerken ist, dass die Lücke zwischen den Abschnitten Aa - Af lediglich zur besseren Darstellung der einzelnen Abschnitte Aa - Af dargestellt ist und nicht durch die erfindungsgemäße Vorrichtung oder dem Verfahren bedingt ist. Man erkennt, dass das textile Flächengebilde F eine entsprechend der gewünschten Form her herzustellenden Bauteils konturnahe Form hat. Durch Drehung der Ablagefläche um die Drehachse D kann eine weitere Lage des textilen Flächengebildes erzeugt werden, deren Abschnitte sich in ihrer Länge unter einem vorgegebenen Winkel relativ zu den Abschnitten Aa - Af der in der Figur 3 gezeigten Lage erstrecken.

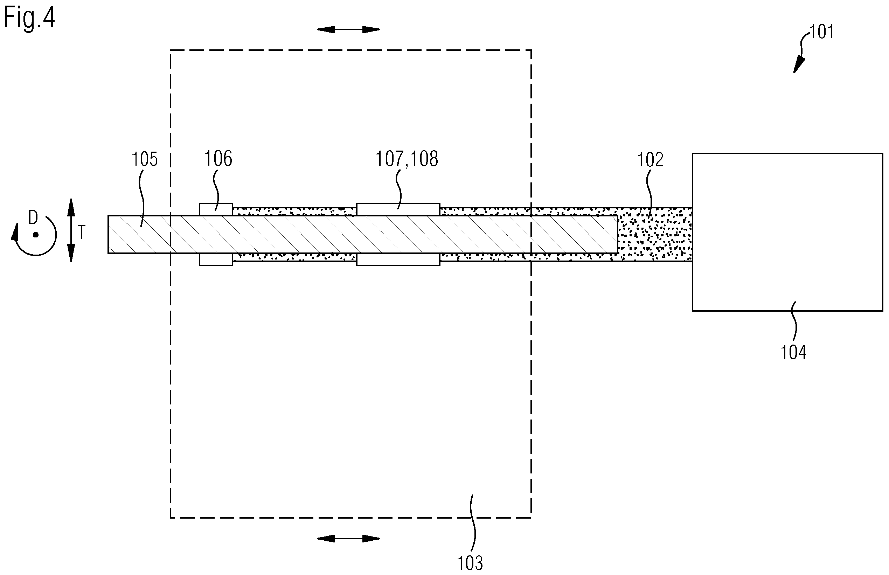

Die Figur 4 zeigt eine weitere Vorrichtung in Draufsicht von oben auf die Ablagefläche 3. Im Folgenden soll nur auf die Unterschiede zur Vorrichtung der Figuren 1 und 2 eingegangen werden.

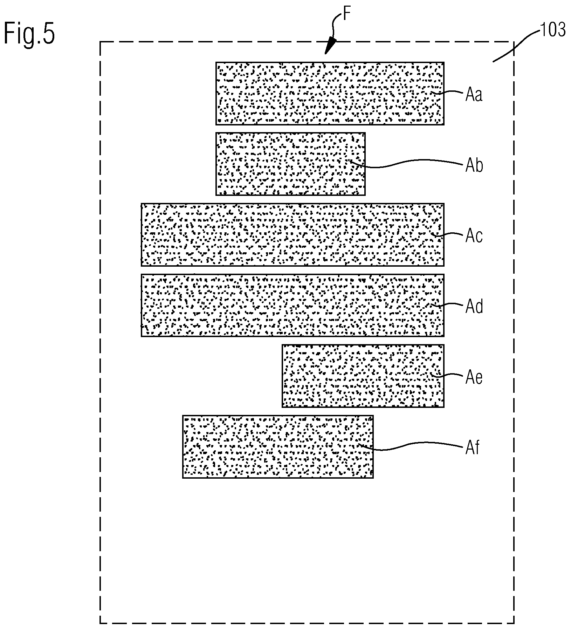

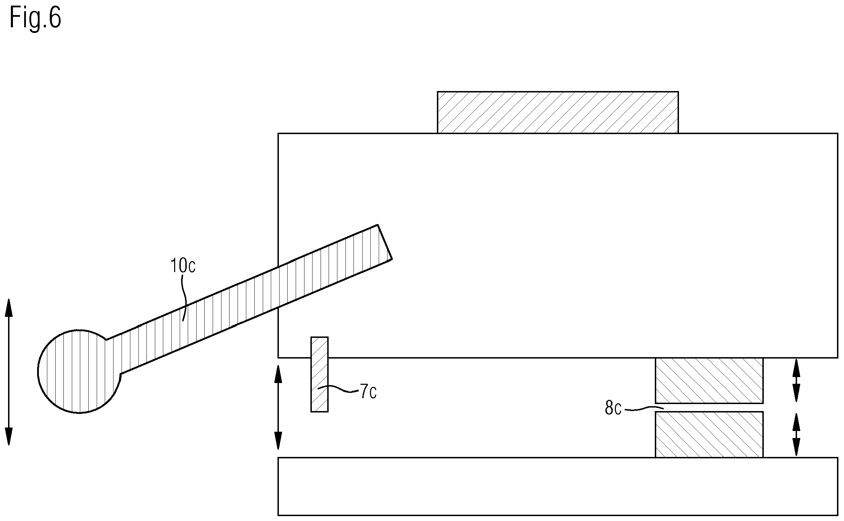

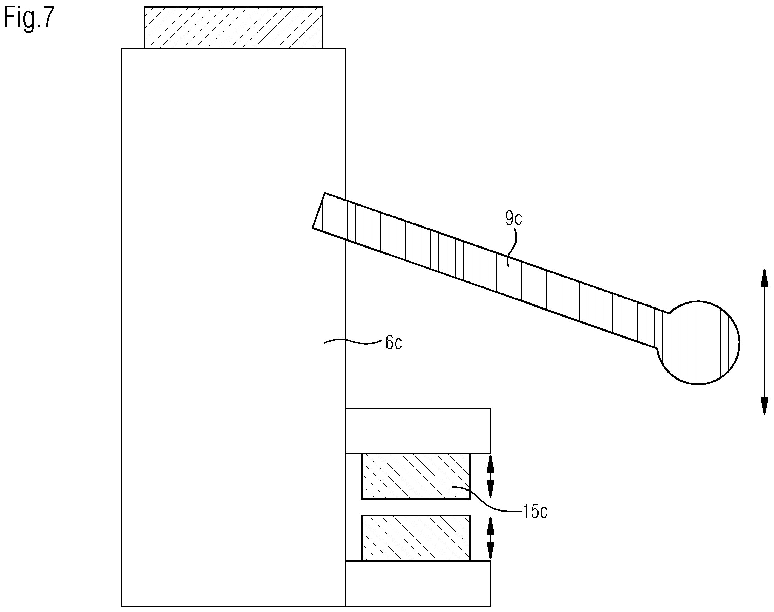

Die in der Figur 4 gezeigte Vorrichtung 101 weist lediglich eine (einzige) Bahnführungsschiene 105 mit zugeordneter Greifereinheit 106, Schneideinheit 107 und Übergabeeinrichtung 108 auf, die lediglich einen einzigen Faserroving 102 bearbeiten. Folglich werden alle Abschnitte Aa - Af aus dem einen Faserroving 102 nacheinander gebildet -wie in der Figur 1 beschreiben- und nebeneinander auf der Ablagefläche 103 abgelegt. Um das nebeneinander Ablegen auf der Ablagefläche 103 zu ermöglichen, ist die Ablagefläche 103 im vorliegenden Ausführungsbeispiel relativ zur Bahnführungsschiene 105 in einer Richtung T translatorisch bewegbar und zwar in einer Richtung, die schräg -vorliegend senkrecht- zur Bahnführungsschiene 105 verläuft. Durch diese Translationsbewegung in Richtung T kann mit nur einer Bahnführungsschiene 105 mit zugeordneter Greifereinheit 106, Schneideinheit 107 und Übergabeeinrichtung 108 ein mehrere nebeneinander abgelegte Abschnitten Aa - Af umfassendes textiles Flächengebilde F hergestellt werden. Dementsprechend kann die in der Figur 5 gezeigte erste Lage des mit der Vorrichtung der Figur 4 hergestellten textilen Flächengebildes gleich ausgebildet sein, wie die des textilen Flächengebildes der Figur 3.

## Patentansprüche

1. Vorrichtung (1) zur Herstellung von textilen Flächengebilden, die mehrere nebeneinander abgelegte Abschnitte (Aa-Af) mehrerer insbesondere unidirektionaler Faserrovings (2a-2f) umfassen, wobei die Vorrichtung (1) umfasst:
- eine Ablagefläche (3) auf der die Abschnitte (Aa-Af) des zumindest einen Faserrovings (2a-2f) abgelegt werden,
- eine Bevorratungsvorrichtung (4) zur Bereitstellung mehrerer Faserrovings (2a-2f) sowie zumindest eine Übergabeeinrichtung (8a-8f) zur Bereitstellung des freien Endes (14.1a-14.1f) der Faserrovings,
- mehrere in Bezug zur Ablagefläche nebeneinander angeordnete und über der Ablagefläche angeordnete Bahnführungsschienen (5a-5f), an denen jeweils eine Greifereinheit (6a-6f) und eine Schneideinheit (7a-7f) angeordnet ist, wobei jede Greifereinheit (6a-6f) entlang ihrer Bahnführungsschiene (5a-5f) unabhängig von den Greifereinheiten der anderen Bahnführungsschienen beweg- und positionierbar ist, wobei jede Schneideinheit (7a-7f) entlang ihrer Bahnführungsschiene (5a-5f) unabhängig von den Schneideinheiten der anderen Bahnführungsschiene beweg- und positionierbar ist, wobei die an einer jeweiligen Bahnführungsschiene (5a-5f) angeordnete Greifereinheit (6a-6f) und Schneideinheit (7a-7f) entlang ihrer Bahnführungsschiene unabhängig voneinander beweg- und positionierbar sind und wobei der Greifereinheit (6a-6f) und Schneideinheit (7a-7f) einer jeweiligen Bahnführungsschiene (5a-5f) jeweils einer der zumindest einen Faserrovings (2a-2f) gemeinsam zugeordnet ist, um diesen gemeinsam zugeordneten Faserroving zu bearbeiten
- wobei die Greifereinheiten (6a-6f) ausgelegt sind
- zum Greifen des freien Endes (14.1a-14.1f) des der Greifereinheit zugeordneten Faserrovings und Übernehmen des freien Endes von der Übergabeeinrichtung (8a-8f),
- zum Aufspannen des zugeordneten Faserrovings (2a-2f) über der Ablagefläche (3), indem sich die Greifereinheit (6a-6f), während diese das freie Ende (14.1a-14.1f) festhält, entlang der Bahnführungsschiene (5a-5f) relativ von der Übergabeeinrichtung (8a-8f) bis zu einer gewünschten Endposition (Ea-Ef) weg bewegt und hierbei auf den zugeordneten Faserroving eine Zugkraft in seiner Längsrichtung ausgeübt wird, sowie
- zum Freigeben und Ablegen des freien Endes (14.1a-14.1f) auf der Ablagefläche (3) an der Endposition (Ea-Ef) des Greifers,
- wobei die Schneideinheiten (7a-7f) ausgelegt sind zum Durchtrennen zumindest eines der aufgespannten Faserrovings (2a-2f) an einer Schneidposition (Sa-Sf) zur Ausbildung des Abschnitts (Aa-Af) des jeweiligen Faserrovings, wobei die Schneidposition (Sa-Sf) im aufgespannten Zustand des der Greifereinheit zugeordneten Faserrovings zwischen der Übergabeeinrichtung (8a-8f) und der Endposition (Ea-Ef) angeordnet ist,
- wobei jede der Greifereinheiten (6a-6f), einen Niederhalter (9a-9f) umfasst, mit dem der Faserroving (2a-2f) im Bereich der jeweiligen Endposition (Ea-Ef) gegen die Ablagefläche (3) gedrückt werden kann
- und wobei jede der Schneideinheiten (7a-7f) einen Niederhalter (10a-10f) umfasst, mit dem der Faserroving (2a-2f) im Bereich der Schneidposition (Sa-Sf) gegen die Ablagefläche (3) gedrückt werden kann.

2. Vorrichtung nach Anspruch 1 **dadurch gekennzeichnet, dass** mindestens 4 nebeneinander angeordnete Bahnführungsschienen (5a-5f) mit je einer Greifeinheit (6a-6f) und je einer Schneideinheit (7a-7f) vorgesehen sind.

3. Vorrichtung nach Anspruch 1 oder 2 **dadurch gekennzeichnet, dass** die Endposition (Ea-Ef) der jeweiligen Greifereinheit (6a-6f) und/oder die Schneidposition (Sa-Sf) der jeweiligen Schneideinheit (7a-7f) über der Ablagefläche (3) angeordnet ist und insbesondere entsprechend der gewünschten Kontur des Flächengebildes frei wählbar ist.

4. Vorrichtung nach einem der vorangehenden Ansprüche **dadurch gekennzeichnet, dass** eine Steuerungseinrichtung vorgesehen ist, welche die Greifer- (6a-6f) und Schneideinheiten (7a-7f) der bzw. jeder bzw. der mehreren Bahnführungsschienen (5a-5f) derart unabhängig voneinander steuert, dass für den jeweils zugeordneten Faserroving (2a-2f) die Schneidposition (Sa-Sf) und die Endposition (Ea-Ef) entsprechend der gewünschten Länge des Abschnitts (Aa-Af) des jeweiligen Faserrovings und dessen Position auf der Ablagefläche (3) angefahren wird.

5. Vorrichtung nach einem der vorangehenden Ansprüche **dadurch gekennzeichnet, dass** die Niederhalter (9a-9f) der Greifeinheiten und/oder die Niederhalter (10a-10f) der Schneideinheiten so ausgebildet sind, dass sie jeweils alle Fasern des zugeordneten Faserrovings (2a-2f) an die Ablagefläche (3) drücken können.

6. Vorrichtung nach einem der vorangehenden Ansprüche **dadurch gekennzeichnet, dass** die Ablagefläche (3) um eine schräg, insbesondere senkrecht, zu dieser verlaufende Drehachse (D) drehbar ist.

7. Vorrichtung nach einem der vorangehenden Ansprüche **dadurch gekennzeichnet, dass** die Ablagefläche (3) translatorisch relativ zu den Bahnführungsschienen (5a-5f) bewegbar ist, insbesondere in einer Richtung, die schräg, insbesondere senkrecht, zur Bahnführungsschiene verläuft.

8. Vorrichtung nach einem der vorangehenden Ansprüche **dadurch gekennzeichnet, dass** die Niederhalter (9a-9f, 10a-10f) der derselben Bahnführungsschiene (5a-5f) zugeordneten Greifereinheit und Schneideinheit, derart ausgelegt und steuerbar sind, dass diese den Faserroving (2a-2f) gleichzeitig gegen die Ablagefläche (3) drücken.

9. Vorrichtung nach einem der vorangehenden Ansprüche **dadurch gekennzeichnet, dass** die Übergabeeinheiten jeweils eine Halteeinrichtung, insbesondere als Klemmeinrichtung (11a-11f) ausgeführt, umfassen, welche ausgelegt ist den Faserroving (2a-2f) festzuhalten und wieder freizugeben.

10. Vorrichtung nach einem der vorangehenden Ansprüche **dadurch gekennzeichnet, dass** die Halteeinrichtung das freie Ende (14.1a-14.1f) des Faserrovings so lange festhält bis es die zugeordnete Greifereinheit (6a-6f) greift.

11. Vorrichtung nach einem der vorangehenden Ansprüche **dadurch gekennzeichnet, dass** jeder Schneideinheit (7a-7f) jeweils eine eigene Übergabeeinheit (8a-8f) zugeordnet ist.

12. Vorrichtung nach einem der vorangehenden Ansprüche **dadurch gekennzeichnet, dass** zumindest eine der Schneideinheiten (7a-7f) mit zugeordneter Übergabeeinheit (8a-8f) als eine Baugruppe ausgeführt sind, insbesondere, dass jede Schneideinheit mit jeweils zugeordneter Übergabeeinheit jeweils als eine Baugruppe ausgeführt ist, welche gemeinsam entlang der jeweiligen Bahnführungsschiene (5a-5f) bewegbar ist.

13. Vorrichtung nach einem der vorangehenden Ansprüche **dadurch gekennzeichnet, dass** die Bevorratungsvorrichtung (4) eine oder mehrere Abwicklungsstation(en) (12a-12f) umfasst, von denen der zumindest eine in aufgewickelter Form vorliegende Faserroving (2a-2f) abwickelbar ist, wobei insbesondere jeder Abwickelstation (12a-12f) ein Faserroving (2a-2f) zugeordnet ist.

14. Vorrichtung nach einem der vorangehenden Ansprüche **dadurch gekennzeichnet, dass** zumindest eine Abwickelstation (12a-12f), insbesondere alle Abwickelstationen, jeweils eine Spannungs-Steuerungs- und/oder Regelungseinrichtung zur Regelung und/oder Steuerung der Spannung des zugeordneten Faserrovings (2a-2f) hat, wobei insbesondere die Zugspannung für jeden Faserroving unabhängig regel- und/oder steuerbar ist.

15. Vorrichtung nach einem der vorangehenden Ansprüche **dadurch gekennzeichnet, dass** die Bahnführungsschienen (5a-5f) parallel, insbesondere geradlinig parallel, zueinander verlaufen und/oder dass die Bahnführungsschienen in einer Ebene verlaufen, die parallel zur Ablagefläche (3) ist.

## Claims

1. Device (1) for the production of textile planar structures which comprise a plurality of portions (Aa-Af) deposited beside one another of a plurality of in particular unidirectional fiber rovings (2a-2f), wherein the device (1) comprises:
- a depositing face (3) on which the portions (Aa-Af) of the at least one fiber roving (2a-2f) are deposited;
- a supply device (4) for providing a plurality of fiber rovings (2a-2f) and at least one transfer installation (8a-8f) for providing the free end (14.1a-14.1f) of the fiber rovings;
- a plurality of path guiding rails (5a-5f), which in relation to the depositing face are disposed beside one another and are disposed above the depositing face, on which in each case one gripper unit (6a-6f) and one cutting unit (7a-7f) are disposed, wherein each gripper unit (6a-6f) is movable and positionable along the path guiding rail (5a-5f) thereof independently of the gripper units of the other path guiding rails, wherein each cutting unit (7a-7f) is movable and positionable along the path guiding rail (5a-5f) thereof independently of the cutting units of the other path guiding rails, wherein the gripper unit (6a-6f) and cutting unit (7a-7f) that are disposed on a respective path guiding rail (5a-5f) are movable and positionable along the path guiding rail thereof in a mutually independent manner, and wherein the gripper unit (6a-6f) and cutting unit (7a-7f) of a respective path guiding rail (5a-5f) are collectively assigned in each case one of the at least one fiber rovings (2a-2f) so as to process this collectively assigned fiber roving;
- wherein the gripper units (6a-6f) are conceived
- for gripping the free end (14.1a-14.1f) of the fiber roving that is assigned to the gripper unit and acquiring the free end from the transfer installation (8a-8f) ;
- for erecting the assigned fiber roving (2a-2f) above the depositing face (3) in that the gripper unit (6a-6f), while the latter keeps hold of the free end (14.1a-14.1f), moves along the path guiding rail (5a-5f) in a relative manner away from the transfer installation (8a-8f) up to a desired terminal position (Ea-Ef) and herein a tensile force is exerted on the assigned fiber roving in the longitudinal direction thereof; and
- for releasing and depositing the free end (14.1a-14.1f) on the depositing face (3) at the terminal position (Ea-Ef) of the gripper;
- wherein the cutting units (7a-7f) are conceived for severing at least one of the errected fiber rovings (2a-2f) at a cutting position (Sa-Sf) in order for the portion (Aa-Af) of the respective fiber roving to be configured, wherein the cutting position (Sa-Sf) in the erected state of the fiber roving assigned to the gripper unit is disposed between the transfer installation (8a-8f) and the terminal position (Ea-Ef);
- wherein each of the gripper units (6a-6f) comprises a downholder (9a-9f), by way of which the fiber roving (2a-2f) in the region of the respective terminal position (Ea-Ef) can be pressed against the depositing face (3);
- and wherein each of the cutting units (7a-7f) comprises a downholder (10a-10f), by way of which the fiber roving (2a-2f) in the region of the cutting position (Sa-Sf) can be pressed against the depositing face (3).

2. Device according to Claim 1, **characterized in that** at least 4 path guiding rails (5a-5f) that are disposed beside one another, each having one gripper unit (6a-6f) and each having one cutting unit (7a-7f), are provided.

3. Device according to Claim 1 or 2, **characterized in that** the terminal position (Ea-Ef) of the respective gripper unit (6a-6f) and/or the cutting position (Sa-Sf) of the respective cutting unit (7a-7f) are/is disposed above the depositing face (3) and in particular are/is freely selectable so as to correspond to the desired contour of the planar structure.

4. Device according to one of the preceding claims, **characterized in that** a control installation is provided which controls the gripper units (6a-6f) and cutting units (7a-7f) of the guide rail, each of the guide rails, or of the plurality of guide rails (5a-5f), respectively, independently of one another in such a manner that the cutting position (Sa-Sf) and the terminal position (Ea-Ef) are approached for the respective assigned fiber roving (2a-2f) so as to correspond to the desired length of the portion (Aa-Af) of the respective fiber roving and the position thereof on the depositing face (3).

5. Device according to one of the preceding claims, **characterized in that** the downholders (9a-9f) of the gripper units and/or the downholders (10a-10f) of the cutting units are configured such that said downholders can press in each case all fibers of the assigned fiber roving (2a-2f) onto the depositing face (3).

6. Device according to one of the preceding claims, **characterized in that** the depositing face (3) is rotatable about a rotation axis (D) that runs obliquely, in particular perpendicularly, to said depositing face.

7. Device according to one of the preceding claims, **characterized in that** the depositing face (3) is movable in a translatory manner relative to the path guiding rails (5a-5f), in particular in a direction which runs obliquely, in particular perpendicularly, to the path guiding rail.

8. Device according to one of the preceding claims, **characterized in that** the downholders (9a-9f, 10a-10f) of the gripper unit and cutting unit that are assigned to the same path guiding rail (5a-5f) are conceived and controllable in such a manner that said downholders simultaneously press the fiber roving (2a-2f) against the depositing face (3).

9. Device according to one of the preceding claims, **characterized in that** the transfer units comprise in each case one holding installation, in particular embodied as a clamping installation (11a-11f), which is conceived to keep hold of the fiber roving (2a-2f) and to release it again.

10. Device according to one of the preceding claims, **characterized in that** the holding installation keeps hold of the free end (14.1a-14.1f) of the fiber roving until said free end grips the assigned gripper unit (6a-6f).

11. Device according to one of the preceding claims, **characterized in that** each cutting unit (7a-7f) is in each case assigned a dedicated transfer unit (8a-8f).

12. Device according to one of the preceding claims, **characterized in that** at least one of the cutting units (7a-7f) having an assigned transfer unit (8a-8f) is embodied as a functional group, in particular **in that** each cutting unit having in each case an assigned transfer unit is in each case embodied as a functional group, said functional group being collectively movable along the respective path guiding rail (5a-5f).

13. Device according to one of the preceding claims, **characterized in that** the supply device (4) comprises one or a plurality of unwinding station(s) (12a-12f), from which the at least one fiber roving (2a-2f) that is present in a wound form is unwindable, wherein in particular each unwinding station (12a-12f) is assigned one fiber roving (2a-2f).

14. Device according to one of the preceding claims, **characterized in that** at least one unwinding station (12a-12f), in particular all unwinding stations, have in each case one tension control and/or regulating installation for regulating and/or controlling the tension of the assigned fiber roving (2a-2f), wherein in particular the tensile stress is capable of being regulated and/or controlled independently for each fiber roving.

15. Device according to one of the preceding claims, **characterized in that** the path guiding rails (5a-5f) run so as to be parallel, in particular linearly parallel with respect to one another, and/or **in that** the path guiding rails run in a plane which is parallel to the depositing face (3).

## Revendications

1. Dispositif (1) de fabrication de produits textiles plats, lesquels comprennent plusieurs sections juxtaposées (Aa-Af) de plusieurs mèches de fibres (2a-2f), en particulier unidirectionnelles, dans lequel le dispositif (1) comprend :
- une surface de dépôt (3) sur laquelle les sections (Aa-Af) de l'au moins une mèche de fibres (2a-2f) sont déposées,
- un dispositif d'approvisionnement (4) destiné à préparer plusieurs mèches de fibres (2a-2f) ainsi qu'au moins un moyen de transfert (8a-8f) permettant de préparer les extrémités libres (14.1a-14.1f) des mèches de fibres,
- plusieurs rails de guidage de bande (5a-5f) juxtaposés par rapport à la surface de dépôt et agencés au-dessus de la surface de dépôt, sur lesquels sont agencés respectivement une unité de préhension (6a-6f) et une unité de coupe (7a-7f), dans lequel chaque unité de préhension (6a-6f) est mobile et positionnable le long de son rail de guidage de bande (5a-5f) indépendamment des unités de préhension des autres rails de guidage de bande, dans lequel chaque unité de coupe (7a-7f) est mobile et positionnable le long de son rail de guidage de bande (5a-5f) indépendamment des unités de coupe des autres rails de guidage de bande, dans lequel l'unité de préhension (6a-6f) et l'unité de coupe (7a-7f) agencées sur un rail de guidage de bande (5a-5f) respectif sont mobiles et positionnables le long de leur rail de guidage de bande indépendamment l'une de l'autre et dans lequel une des au moins une mèche de fibres (2a-2f) est attribuée à l'unité de préhension (6a-6f) et à l'unité de coupe (7a-7f) d'un rail de guidage de bande (5a-5f) respectif, afin de traiter cette mèche de fibres attribuée conjointement
- dans lequel les unités de préhension (6a-6f) sont disposées
∘ afin de saisir les extrémités libres (14.1a-14.1f) de la mèche de fibres attribuée à l'unité de préhension et de reprendre les extrémités libres depuis le moyen de transfert (8a-8f),
∘ afin de tendre la mèche de fibres attribuée (2a-2f) au-dessus de la surface de dépôt (3), l'unité de préhension (6a-6f), pendant que celle-ci maintient l'extrémité libre (14.1a-14.1f), s'éloigne du moyen de transfert (8a-8f) le long du rail de guidage de bande (5a-5f) jusqu'à une position finale souhaitée (Ea-Ef) et à cet effet une force de traction est exercée sur la mèche de fibres attribuée dans sa direction longitudinale, ainsi que
∘ afin de libérer et déposer l'extrémité libre (14.1a-14.1f) sur la surface de dépôt (3) à la position finale (Ea-Ef) du préhenseur,
- dans lequel les unités de coupe (7a-7f) sont disposées pour sectionner au moins une des mèches de fibres tendues (2a-2f) à une position de coupe (Sa-Sf) afin de réaliser la section (Aa-Af) de la mèche de fibres respective, dans lequel la position de coupe (Sa-Sf) dans l'état tendu de la mèche de fibres attribuée à l'unité de préhension est agencée entre le moyen de transfert (8a-8f) et la position finale (Ea-Ef),
- dans lequel chacune des unités de préhension (6a-6f) comprend un presseur (9a-9f), avec lequel la mèche de fibres (2a-2f) peut être pressée contre la surface de dépôt (3) dans la zone de la position finale (Ea-Ef) respective,
- et dans lequel chacune des unités de coupe (7a-7f) comprend un presseur (10a-10f) avec lequel la mèche de fibres (2a-2f) peut être pressée contre la surface de dépôt (3) dans la zone de la position de coupe (Sa-Sf).

2. Dispositif selon la revendication 1, **caractérisé en ce qu'**au moins 4 rails de guidage de bande (5a-5f) juxtaposés sont prévus avec chacun une unité de préhension (6a-6f) et une unité de coupe (7a-7f).

3. Dispositif selon la revendication 1 ou 2, **caractérisé en ce que** la position finale (Ea-Ef) de l'unité de préhension (6a-6f) respective et/ou la position de coupe (Sa-Sf) de l'unité de coupe (7a-7f) respective est agencée au-dessus de la surface de dépôt (3) et est en particulier librement sélectionnable selon le contour souhaité du produit plat.

4. Dispositif selon l'une des revendications précédentes, **caractérisé en ce qu'**un moyen de commande est prévu, lequel commande les unités de préhension (6a-6f) et de coupe (7a-7f) du ou de chacun ou des plusieurs rails de guidage de bande (5a-5f) indépendamment l'une de l'autre de telle sorte que pour la mèche de fibres (2a-2f) respectivement attribuée la position de coupe (Sa-Sf) et la position finale (Ea-Ef) correspondant à la longueur souhaitée de la section (Aa-Af) de la mèche de fibres respective et de la position de celle-ci sur la surface de dépôt (3) est atteinte.

5. Dispositif selon l'une des revendications précédentes, **caractérisé en ce que** les presseurs (9a-9f) des unités de préhension et/ou les presseurs (10a-10f) des unités de coupe sont réalisés de telle sorte qu'ils peuvent respectivement presser toutes les fibres de la mèche de fibres attribuée (2a-2f) sur la surface de dépôt (3).

6. Dispositif selon l'une des revendications précédentes, **caractérisé en ce que** la surface de dépôt (3) peut tourner autour d'un axe de rotation (D) diagonal, en particulier perpendiculaire, par rapport à celle-ci.

7. Dispositif selon l'une des revendications précédentes, **caractérisé en ce que** la surface de dépôt (3) est mobile en translation relativement aux rails de guidage de bande (5a-5f), en particulier dans une direction diagonale, en particulier perpendiculaire, par rapport au rail de guidage de bande.

8. Dispositif selon l'une des revendications précédentes, **caractérisé en ce que** les presseurs (9a-9f, 10a-10f) de l'unité de préhension et de l'unité de coupe attribuées au même rail de guidage de bande (5a-5f) sont disposés et commandables de telle sorte que ceux-ci pressent la mèche de fibres (2a-2f) contre la surface de dépôt (3) simultanément.

9. Dispositif selon l'une des revendications précédentes, **caractérisé en ce que** les unités de transfert comprennent respectivement un moyen de maintien, en particulier réalisé comme moyen de pince (11a-11f), lequel est disposé pour maintenir puis libérer la mèche de fibres (2a-2f).

10. Dispositif selon l'une des revendications précédentes, **caractérisé en ce que** le moyen de maintien retient l'extrémité libre (14.1a-14.1f) de la mèche de fibres jusqu'à ce qu'elle soit prise par l'unité de préhension (6a-6f) attribuée.

11. Dispositif selon l'une des revendications précédentes, **caractérisé en ce qu'**une unité de transfert propre (8a-8f) est respectivement attribuée à chaque unité de coupe (7a-7f).

12. Dispositif selon l'une des revendications précédentes, **caractérisé en ce qu'**au moins une des unités de coupe (7a-7f) est réalisée avec l'unité de transfert attribuée (8a-8f) comme un composant, en particulier, **en ce que** chaque unité de coupe est réalisée avec l'unité de transfert respectivement attribuée comme un composant, lequel est conjointement mobile le long du rail de guidage de bande respectif (5a-5f).

13. Dispositif selon l'une des revendications précédentes, **caractérisé en ce que** le dispositif d'approvisionnement (4) comprend un ou plusieurs postes de déroulement (12a-12f), depuis lesquels l'au moins une mèche de fibres (2a-2f) se trouvant sous forme enroulée peut être déroulée, dans lequel en particulier une mèche de fibres (2a-2f) est attribuée à chaque poste de déroulement (12a-12f).

14. Dispositif selon l'une des revendications précédentes, **caractérisé en ce qu'**au moins un poste de déroulement (12a-12f), en particulier tous les postes de déroulement, a respectivement un moyen de commande et/ou régulation de la tension afin de réguler et/ou commander la tension de la mèche de fibres attribuée (2a-2f), dans lequel en particulier la tension de traction est régulable et/ou commandable indépendamment pour chaque mèche de fibres.

15. Dispositif selon l'une des revendications précédentes, **caractérisé en ce que** les rails de guidage de bande (5a-5f) sont parallèles l'un à l'autre, en particulier parallèles en ligne droite et/ou **en ce que** les rails de guidage de bande s'étendent dans un plan parallèle à la surface de dépôt (3).
